# EUROPEAN PATENT APPLICATION

(11) **EP 4 424 170 A1**
(43) Date of publication of application: **04.09.2024**
(21) Application number: 23159851.7
(22) Date of filing: 03.03.2023
(51) Int. Cl.: A23J 1/00, A23J 1/14, B04B 11/02, A23J 1/12

(54) **PROCESS FOR EXTRACTING STARCH, FIBRES AND PROTEIN FROM A PLANT-BASED RAW MATERIAL**

(71) Applicant: Alfa Laval Corporate AB, 221 00 Lund (SE)
(72) Inventor: MASIK, Joosep, DK-2800 KGS. LYNGBY (DK); LUDVIGSEN, Peter, DK-3550 SLANGERUP (DK)
(74) Representative: Alfa Laval Attorneys

(57) **Abstract**

The present invention relates to a process for extracting starch, fibres and protein from a plant-based raw material. The process comprises supplying slurry of plant-based flour and water to a hydrocyclone system (720), which provides a first flow (F1) comprising the fibres (F) and protein (P) extracted from the plant-based raw material and a second flow (F2) comprising starch (S) extracted from the plant-based raw material. The first flow (F1) is supplied to a first centrifugal separator (S1) to provide a fibre fraction as a third flow (F3) and an aqueous protein-containing fraction as a fourth flow (F4), to which acid is added to precipitate dissolved proteins. The flow (F4) is separated into a liquid light phase comprising whey (Wh) and a heavy phase comprising concentrated protein-containing fraction (CP), by using a highspeed centrifugal disc stack separator (2; S2, 72) comprising a heavy phase outlet and/or light phase outlet that are/is arranged in fluid connection with a flow influencing means (6; 12); and wherein the separating in the second centrifugal separator (S2) comprises regulating the flows at the heavy phase and/or light phase outlets by means of the flow influencing means such that the content of the protein-containing fraction at the light phase outlet is minimized.

## Description

### FIELD OF THE INVENTION

The present disclosure relates to a process for extracting starch, fibres and protein from a plant-based raw material as defined in the appended claims.

### BACKGROUND

The global population is continuously growing, thereby increasing the demand for proteins as food. Studies show that by 2050 the global population reach will nearly 10 billion - an increase of 2.3 billion people. As a result, the demand for protein will increase by 50%, corresponding to more than 256 million tons per annum. At the same time, the arable land and other resources needed to produce traditional meat proteins is limited. These are the two main challenges that require new solutions, i.e., to provide protein for growing population with reduced resources.

Plant-based proteins are considered as one solution that may address these challenges. US2284700A discloses a method of preparing a composite soya bean product which comprises leaching soya bean meal containing water soluble proteins, water soluble carbohydrates, alkali soluble globulin proteins, hemicellulose, cellulose and insoluble prolamine proteins with a weak acid at a pH corresponding to the isoelectric point of the alkali soluble globulin proteins in the meal, dissolving the alkali soluble proteins from the meal, separating the composite of insoluble residue and precipitated protein from the solution by decanting, and drying the composite thus formed.

However, there are challenges in the existing processes in which protein precipitate suspensions are recovered. To recover the precipitated proteins, decanter centrifuges is normally used. However, as some plant-based protein precipitates are very light, there is a risk for overflow of fine suspensions to a centrate, and therefore flowrates need to be reduced. Therefore, to keep up with the desired capacity, the number of decanter centrifuges is often increased. There is thus a desire to provide improved high-capacity ways to provide concentrated protein suspensions.

### SUMMARY

In view of the capacity problem mentioned above, it has been noted to be challenging to increase capacity without increasing the number of decanters. Further, it has been noted different plant-based protein precipitates have different characteristics: some of the precipitates are soft and bulky having a great volume in proportion to weight and such precipitates are more difficult to separate than compact precipitates. This problem has been realized especially when concentrating plant-based protein other than soy. When using other plant-based raw materials, such as pea or mung bean as protein sources, the precipitates may become soft and bulky. The recovery of such precipitated proteins can be very demanding, since they are not easily compacted into a sediment that can be scrolled out of the decanter. When a decanter centrifuge has difficulties in scrolling out the solids, the bowl gradually fills up and as the clarifying volume decreases, the overflow of fine suspended particles into the centrate increases. Therefore, the flowrate to the decanter needs to be decreased and the capacity of the decanter is decreased. This in turn results in many parallel decanters at this process step.

High-speed centrifugal separators with a separation space comprising a disc stack have a high capacity and can provide separation of a material to a solid phase, liquid heavy phase, and liquid light phase. Plant-based protein processing systems may employ discharging centrifuges of clarifier type for carried-over fines recovery or for a secondary recovery of whey proteins (albumins not precipitating at the isoelectric point) after thermal coagulation. However, continuously discharging 3-phase high speed separators have not been used for separating precipitated suspended plant-based proteins. Such suspended proteins are soft and bulky in the suspension, and it is difficult to form a clear interface between the liquid and the suspended particles in such 3-phase high-speed centrifugal separators. Additionally, in connection with soybean and groundnut or other oilseeds it has been described by GB813434 that precipitated suspension thereof tend to block the nozzles of a centrifuge, whereby there is a need to add salt before separation.

Despite the teachings away from the present invention, the inventors have found that it is possible to use high-speed separation for recovering a concentrated plant-based protein suspension having bulky and soft precipitates. By concentrated suspension is meant a suspension from which clear liquid has been at least partly removed. It has been noted that such suspensions and precipitates have shear thinning characteristics, meaning that the viscosity decreases with increasing shear rate. It was then surprisingly found that use can be made of a 3-phase high speed centrifugal separator, having means to influence, i.e. actively or passively regulate, the flow through a heavy phase outlet such that a concentrated protein suspension comprising the precipitated bulky protein particles is conveyed through the heavy phase outlet, and that a liquid light phase, which corresponds to clarified liquid of the suspension, is conveyed through the liquid light phase outlet and as defined in the appended claims. By influencing the flow is meant that flow characteristics, such as counter pressure or movement, e.g., laminar-turbulent, characteristics are influenced by actively or passively regulating the flow characteristics. For example, valves may be incorporated to actively regulate the counter-pressure. Alternatively, or additionally, different types of passive vortex generating means can be used in fluid channels of the separator, e.g., at the heavy phase outlet of a separator.

In addition to using the specific type of centrifugal separator above, it has been found that by using hydrocyclones, when recovering protein from plants, the process in total may be further simplified and made more effective.

The present invention thus relates to a process for extracting starch, fibres and protein from a plant-based raw material, the process comprising:
- providing a flour from the plant-based raw material,
- mixing the flour with water and/or process water recirculated from a downstream process step to provide a slurry,
- increasing the protein solubility in the slurry by a chemical and/or physical treatment comprising at least one of mixing, regulating temperature and/or adding a chemical to increase the solubility of the protein,
- supplying the slurry and wash water to a hydrocyclone system, which provides a first flow comprising the fibres and protein extracted from the plant-based raw material and a second flow comprising starch extracted from the plant-based raw material,
- supplying the first flow to a first centrifugal separator arranged to separate the first flow to a fibre fraction as a third flow and an aqueous protein-containing fraction as a fourth flow,
- precipitating dissolved protein at least partly in the fourth flow,
- separating the fourth flow containing the protein-containing fraction into a liquid light phase comprising whey and a heavy phase comprising concentrated protein-containing fraction, by using a second centrifugal separator, which is a high-speed centrifugal separator comprising:
   a frame, a drive member and a centrifuge bowl,
   wherein the drive member is configured to rotate the centrifuge bowl in relation to the frame around an axis of rotation, and
   wherein the centrifuge bowl encloses a separation space comprising a stack of separation discs, and
   wherein the centrifuge bowl further comprises an inlet for receiving the fourth flow containing the protein-containing fraction, a liquid light phase outlet for a separated liquid light phase and a heavy phase outlet for a separated heavy phase, and
   wherein the heavy phase outlet and/or light phase outlet are/is arranged in fluid connection with a flow influencing means; and
   wherein the separating in the second centrifugal separator comprises regulating the flows at the heavy phase and/or light phase outlets by means of the flow influencing means such that the content of the protein-containing fraction at the light phase outlet is minimized.

In addition to decreasing product losses and even obtaining an increased recovery rate of the suspended protein, by the present method it is also possible to simplify known methods in which a single decanter is used to remove starch and fibre together from the protein extraction slurry. Furthermore, the use of single hydrocyclone system makes the process more hygienic. Additionally, it may help to increase the capacity of the process. An additional synergy effect is obtained by the process using the hydrocyclone system upstream of the separation steps, as less water can be used in the overall process since at least part of the water which is fed to the process can be recirculated in the process.

According to an aspect, the process further comprises supplying the second flow containing the starch extracted from the plants to a third centrifugal separator for further purifying and/or dewatering the starch.

According to a further aspect the process comprises supplying the third flow comprising fibres and water to a fourth centrifugal separator to provide washed fibres and extracted process water, which is at least partly re-circulated in the upstream process.

In the known solution using single decanter to remove starch and fibre mentioned above, the decanter solids phase then needs to be processed further to separate starch and fibre and purify the starch. This is laborious and uses for example the following steps: diluting of the decanter solids phase with process water; separating fibre and starch with a rotating screen and washing of the fibre retained on the screen surface with process water; pre-dewatering of the washed fibre on a second stage rotating screen; final dewatering of the fibre with a decanter; concentrating the starch that has been diluted by the fibre wash water using a hydrocyclone system; purification of the concentrated starch with a second hydrocyclone system.

These process steps can according to the present disclosure thus be replaced by the single hydrocyclone system that separates starch and fibre and purifies the starch in a single step followed by the two decanter steps to separate and wash the fibre. This is a much simpler and hygienic process. Additionally, water can be re-circulated from downstream process steps to upstream process steps, whereby water-savings can be achieved while important product losses can be decreased.

An example of a suitable separator, in which the adjusting of the counter pressure at both light phase and heavy phase outlet can be done, is a separator arrangement in which both the light and heavy phases are continuously pumped out through a respective outlet. Such separator is especially suitable for suspensions comprising bulky protein precipitates. Suitably, the separator is additionally hermetically sealed both at the inlet and the outlets. This mode of transport ensures that even the fine suspended particles can be hydrodynamically carried out from the machine and the g-force that is developed ensures that protein particles will accumulate at the periphery and from there will be directed to the top disk and eventually to the heavy phase outlet.

The flow influencing means may be a flow regulating means comprising a valve connected to the heavy and/or light phase outlet. The heavy phase outlet may comprise means for adjusting counter pressure of the heavy phase at the heavy phase outlet with respect to the liquid light phase outlet, or vice versa. Thus, the counter pressure on both the light and the heavy phase outlet can be adjusted. This working principle is fundamentally different from both a clarifier type of a separator with a regular discharge of solids from the periphery of a separator bowl, but also from a horizontal decanter centrifuge.

Alternatively, the heavy phase outlet may comprise a passive flow regulator, such as a vortex generator, tesla valve, and/or different types of nozzles that can influence or passively regulate the flow geometry and/or viscosity. An example of a suitable type of passive regulator is disclosed in US4311270, which shows a vortex fluidic device in the outlet of the separator, which is a passive regulator that influences the flow through the heavy phase outlet.

The process may further comprise supplying the concentrated protein-containing fraction from the second centrifugal separator to a fifth centrifugal separator, wherein protein in the protein-containing fraction is discharged as the solids phase. Further, the process may comprise adding water to the concentrated protein-containing fraction from the second centrifugal separator upstream of the fifth centrifugal separator, and re-circulating separated water from the fifth centrifugal separator to the fourth flow downstream of the first centrifugal separator and upstream of the second centrifugal separator.

According to a further aspect, the process step of increasing the protein solubility may include adjusting the pH in the slurry by adding a base, and then at least partly precipitating dissolved protein in the fourth flow by adding an acid. Further, the whey separated in the second centrifugal separator may contain non-precipitated proteins. The process may therefore further comprise recovering the protein in the whey by heat coagulation, decantation and/or by using other separation technology, such as membrane separation.

Further, the step of influencing the flow through the heavy phase outlet in the second centrifugal separator comprises adjusting counter pressure of the heavy phase at the heavy phase outlet with respect to the liquid light phase outlet, or vice versa, and wherein the flow influencing means is a flow regulating means comprising a valve. In this way, it is possible to adapt the outlet flows so that maximum recovery of precipitated proteins for different slurries can be obtained.

According to a variant, the method may further comprise measuring at least one parameter of the removed heavy phase and/or liquid light phase, wherein said parameter is related to the concentration of the heavy phase in the light phase, or vice versa; and adjusting the counter pressure of the heavy phase outlet with respect to the liquid light phase outlet, or vice versa, based on the parameter related to the concentration. In this way the concentration of the heavy phase in the liquid light phase, or vice versa, discharged from the separator can be controlled. The concentration of suspended protein particles present in the liquid light phase may be measured. It is desirable to keep this concentration as low as possible. The measurement may be performed manually off-line or in-line by means of an automatic sensor. In this way, the separation may be regulated so as to minimize the solids content in the light phase, whereby product losses can be minimized. The concentrated heavy phase may contain a larger content of liquid light phase to minimize the risk for clogging of the separator.

At least one of the first, third, fourth and fifth separators may be a decanter centrifuge. According to a variant, the first, third, fourth and fifth separators may be a decanter centrifuge.

Th inlet and the heavy phase and light phase outlets of the second high-speed centrifugal separator may be hermetically sealed by means of mechanical hermetic seals. Thereby oxygen take-up may be reduced, and a hygienic process provided.

The plant-based raw material may comprise plant-based raw materials, such as starch crops including legumes, oilseeds and cereals. The raw material may comprise low-fat raw materials comprising legumes, such as yellow peas, fava beans, mung beans, lentils, chickpeas, or combinations thereof. Such raw materials may result in bulky/light precipitates in the protein suspensions, and the present method is especially suitable for concentrating such suspensions. The raw material is preferably other than soybean-based material.

The method may comprise de-oiling the plant-based raw material before protein extraction. De-oiling is especially advantageous when the raw-material comprises high-fat raw materials. The de-oiling or de-fatting may be performed before the fractionation, i.e. the precipitation of the protein.

Further features, aspects and advantages with the present invention are described more in detail with reference to the attached figures.

### BRIEF DESCRIPTION OF DRAWINGS

Fig. 1 shows schematically a high-speed centrifugal separator suitable for use in the method of the present disclosure.
Fig. 2 shows schematically an example of a high-speed centrifugal separator in a more detailed view that can be used in the method of the present disclosure.
Fig. 3 illustrates an example mode of the method without upstream processing of starch and fibre.
Fig. 4 illustrates another example mode of the method without upstream processing of starch and fibre.
Fig. 5 shows measured particle size distribution for the plant-based protein suspension to be concentrated.
Fig. 6 shows measured shear viscosity of both slurry (plant-based protein suspension) and solids.
Fig. 7 shows an example of a method according to the present invention with an upstream processing of starch and fibre before recovery of protein by using a high-speed centrifugal separator.
Fig. 8 schematically illustrates an example of a hydrocyclone system.

### DETAILED DESCRIPTION

Liquid light and heavy phases and solids can be separated from each other by using centrifugal separators, which include decanters and high-speed disc stack separators, also referred to as centrifuges and/or high-speed separators. In the present method and system, both decanters and high-speed separators can be used in different stages of the process to achieve the required separation result.

Centrifugal separation is advantageous if compared to e.g. filtration by pressing because the separation process is faster, it allows for more efficient separation of solids and liquids as it uses centrifugal force rather than pressing the product through openings in the filter, and it can be cleaned by CIP (Clean In Place) whereas the filters can normally not.

A decanter is a separator using centrifugal forces and can separate solids from one or two liquid phases. A decanter may be a so-called two-phase (2-phase) or three-phase (3-phase) decanter. The separation is performed by utilizing centrifugal forces that can be beyond 3000 times greater than gravity. When the material to be separated is subjected to such forces, the denser solid particles are pressed outwards against a rotating bowl wall, while the less dense liquid phase forms a concentric inner layer along a longitudinally extending central rotating screw conveyor inside the rotating bowl. Different dam or weir plates are used at the outlets to vary the depth of the liquid, the pond, as required. A sediment formed by the solid particles is continuously removed by the screw conveyor inside the decanter bowl, and the screw conveyor is arranged to rotate at a different speed than the bowl. As a result, the solids are gradually "ploughed" out of the pond and up a conical "beach". The centrifugal forces compact the solids and expels the surplus liquid. The dried solids are then discharged from the bowl. The clarified liquid phase or phases overflow the dam plates situated at the outlet on the opposite end of the bowl. The separated phases are then directed into the correct flow path to reduce or prevent a risk of cross-contamination. The speed of the screw conveyor may be automatically adjusted using a variable frequency drive (VFD) to adjust to a variation in the solids load. Decanter centrifuges can be used to remove large particles from slurries or liquids with a high concentration of solids and it is also possible to separate two liquid phases of varying densities. Decanters may have a separation range suitable for liquids containing more than e.g., 5-10% by weight solids. The particle size may be equal to or greater than 10 microns.

Disk stack separators, also referred to as high-speed separators, use centrifugal force to separate slurries that can have a lower concentration of solids than slurries separated by decanters, but can handle slurries with a high concentration of solids. High-speed separators can also handle slurries having relatively small particle sizes. High-speed separators are suitable for separating two liquid phases as well as a solids phase, and they can be configured as three-phase separators or two-phase separators. Different types of high-speed separators may be used for liquids with different solid contents. For example, continuously discharging nozzle centrifuge can handle higher solids loads than discharge-type of centrifugal separator, which discharges solids intermittently. The particle sizes can be between 0.1 micron (µm) and 150 microns. High-speed centrifugal separators comprising a disc stack are suitable for separating two liquid phases as well as a solids phase and the separation technology can be based on different densities of the liquid/solid phases. The high-speed or disc stack separators use mechanical forces to separate liquids and solids with different densities from each other. Rapid rotation of a separator bowl provides a centrifugal force, or gravitational force known as G-force, which can have an effect up to 10.000 times greater than the force of gravity. G-force is then used to separate liquids from other liquids and solids with accuracy and speed and the separation may be controlled. A disc stack within the bowl contributes to higher separation efficiency by increasing the separation area in the separator bowl. The solids that concentrate at the outer edge of the bowl are discharged - either continuously, intermittently or manually, depending on the volume of solids involved in the specific application. The high-speed separator may be hermetically sealed. For example, it may be hermetically sealed both at the inlets and the outlets, whereby a hygienic separation may be provided with reduced oxygen uptake.

There are basically three types of high-speed separators: a clarifier, purifier and concentrator. A clarifier is a centrifugal separator which may be used for solid/liquid separation, in which solids such as particles, sediments, oil, natural organic matter and color are separated from process liquids. A clear process liquid can be provided by a clarifier. A purifier is a centrifugal separator for liquid - liquid - solid separation, in which two liquids of different densities and solids can be separated from each other. For example, water, oil, and fines can be separated from each other. Using a purifier, the light liquid phase is typically the large fraction which is meant to cleaned. A concentrator is a centrifugal separator designed to separate three different phases, one solid phase and two liquid phases of different densities and clean the densest/heaviest liquid phase.

In the method according to the present disclosure, the plant-based raw material is edible starch crop which contains protein and cell fibres. The raw material may be for example legumes, oilseeds or cereals. Some of the legumes or oilseeds may have a fat content of more than 10% by weight, which is herein referred to as a high fat content. Before providing a protein suspension, at least part of the fats may be removed from the raw material. Examples of raw materials having a high fat content include oilseeds of soybean, sunflower, rapeseed, cottonseed, lupin and linseed, but are not limited thereto. Combinations of these raw materials may also be used. The raw materials may alternatively be legumes or cereals, which may have a fat content of 10% by weight or less, which is herein referred to as a low-fat content. Examples of raw materials having a low-fat content are yellow peas, fava beans, mung beans, lentils and chickpeas, but the raw-materials are not limited thereto. Combinations of these raw materials may also be used.

A plant-based protein suspension comprising suspended protein particles, which is concentrated according to the method of the present disclosure, may be provided in different ways. Firstly, the plant-based raw material may be provided in the form of a protein meal or flour. The fat-content of the protein meal or flour may be reduced. The meal or flour may be provided by any suitable method known in the art. The meal can be mixed with water and the plant-based protein may be dissolved and after removal of non-soluble/non-protein components, the protein can be precipitated to a fine particulate suspension.

By suspension is meant is a heterogeneous mixture of a finely distributed solid in a liquid. The solid is not dissolved in the liquid.

According to an example, the plant-based protein can be at least partly dissolved by adding an alkali to a ground plant-based meal, which may be provided as an aqueous mixture. The alkali may be for example an alkali metal hydroxide, such as sodium hydroxide (lye). The plant-based protein can be precipitated by adding an acid or an organic solvent to the solution comprising the dissolved plant-based protein. The acid may be an inorganic acid, such as hydrochloric acid or an organic acid or an organic solvent, such as ethanol. The acid may be a weak acid. The acid can be added at a pH corresponding to the isoelectric point of the alkali-soluble proteins in the meal. Other known methods to provide the plant-based protein suspension may be used if the level of precipitated dissolved proteins is sufficient.

According to the present method, use is made of a high-speed centrifugal separator, which comprises a frame, a drive member, and a centrifuge bowl to concentrate the protein suspension. The drive member is configured to rotate the centrifuge bowl in relation to the frame around an axis of rotation. The centrifuge bowl encloses a separation space comprising a stack of separation discs, an inlet for receiving the plant-based protein suspension, a liquid light phase outlet for a separated liquid light phase and a heavy phase outlet for the separated concentrated protein suspension as a heavy phase. The high-speed centrifugal separator may comprise at least one sludge or solids outlet for discharging a separated solid phase. The solid outlet is arranged at the periphery of the centrifuge bowl. The discharge may be done interm ittently.

The high-speed centrifugal separator used in the present method comprises a flow influencing or regulating means in fluid connection with either one or both heavy phase outlet and light phase outlet. By flow influencing means is meant a device that is configured to regulate the flow characteristics of the separated fluids at the outlets. For example, an active type of device may be used to regulate the counter pressure of the outlet, an example of which is a valve. Passive-type of devices may be used as well, for example self-regulating vortex nozzles, which affect the linearity of the flow at the outlets.

The plant-based protein suspension may be fed to the inlet of the high-speed centrifugal separator and is separated into a liquid light phase, which comprises a clarified liquid phase of the suspension (whey) comprising insoluble proteins, and a heavy phase comprising the concentrated protein suspension with the protein particles. In the method the removal of the concentrated plant-based protein suspension as the heavy phase through the heavy phase outlet is possible, since the removal or discharge through the respective outlet is affected by means of the liquid flow influencing means so that the suspended particles can be pushed through the heavy phase outlet. At the same time the liquid light phase removed through the light phase outlet preferably contains low content of suspended protein particles, such as less than 2% by volume.

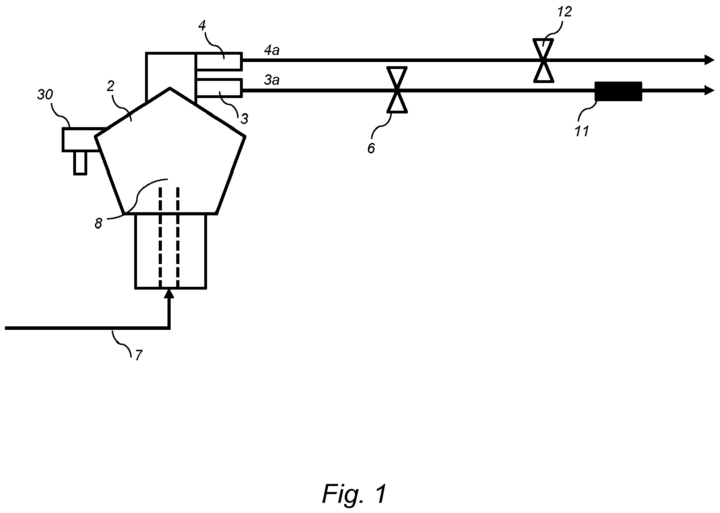

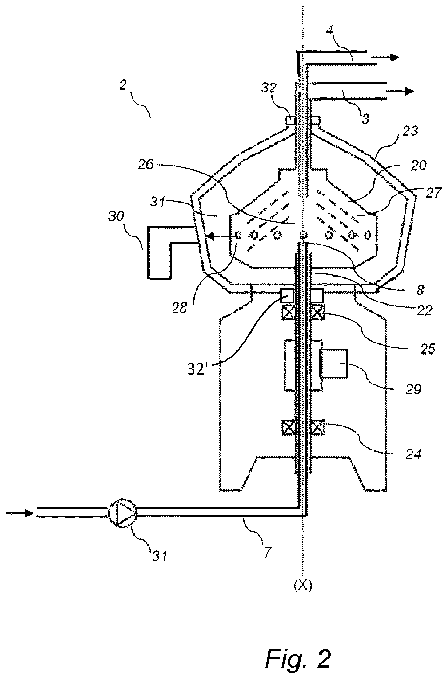

The high-speed separator usable in the method according to the present disclosure will be further illustrated by the following description with reference to the accompanying drawings. Fig. 1 shows schematically a high-speed centrifugal separator of the type that can be used in the present method for concentrating a plant-based protein suspension. The method may be continuous or a batch method. The plant-based protein suspension is fed by a pump via an inlet pipe 7 to a high-speed centrifugal separator 2, which may be mechanically hermetically sealed. The feed is introduced centrally from below, i.e., the separator is bottom-fed, and enters the separation space in the separator via an inlet 8. A more detailed description of the working principles of the separator 2 is disclosed in relation to Fig. 2 below. After being processed in the separator 2, the suspension comprising particulate plant-based proteins is separated into a heavy phase comprising the concentrated suspended plant-based proteins and to a liquid light phase. Since the heavy phase comprises the particles, it may have a higher density than the liquid light phase. The particles are suspended in the liquid forming the light phase. The heavy phase is removed from the separator via a heavy phase outlet 3. A clarified light phase is removed via a liquid light phase outlet 4. The heavy phase outlet 3 comprises an outlet pipe 3a, which fluidly connects the outlet 3 to a regulating valve 6, which is configured to influence or regulate the flow through the outlet 3 by regulating the counter pressure of the outlet 3, suitably with respect to the liquid light phase outlet 4. In the similar manner, the liquid light phase outlet 4 comprises an outlet pipe 4a, which fluidly connects the outlet 4 to a regulating valve 12. The regulating valve corresponds to the flow influencing means and is configured to regulate the counter pressure of the light phase outlet 4, suitably with respect to the liquid heavy phase outlet 3.

The regulation of the valves can be determined by a laboratory spin-test of the light phase. If the volumetric losses of the protein particles exceed predefined volumetric losses, e.g. more than 1%, the counter pressure at the heavy phase and/or the light phase is adjusted by means of the valves. The sampling may be done manually, for example by taking a sample is taken manually, spinning the sample, and then evaluating the content of suspended particles by volume %. The counter pressure is then regulated based on the content of suspended particles in the light phase. The content should be as low as possible to minimize product losses and securing highest possible concentration of heavy phase. The sampling can be also performed automatically by using a suitable sensor connected with any of the outlets 3 and/or 4. The measured characteristic of the liquid phase can be in-line and the measurement value can be sent to a control unit, which compares the measured value with a reference value and depending on the comparison, adjusts the counter pressure of one of the outlets with respect to the other outlet by the regulating valves 6, 12.

By regulating the valve 6, the counter pressure of outlet 3 is adjusted by varying the opening degree of the valve. In this way the interface level between the separated heavy phase and the light phase in the separator is adjusted radially. Thus, the opening degree of the valve 6 determines the counter pressure and by regulating valve 6, the content of suspended proteins present in the separated heavy phase may be varied or controlled. By regulating the valves 6 and 12 so that the counter pressure at the heavy phase and the light phase outlets is adjusted, the volumetric split between the light and heavy phase can be adjusted. By adjusting the counter pressure at each of the heavy phase and light phase outlets, the volumetric split is adjusted such that the loss of the suspended protein to the light phase is limited. The objective is at the same time to maximize the concentration of the suspended protein in the heavy phase, while it still can be pressed out from the heavy phase outlet without blocking the outlet.

Furthermore, a flow transmitter 11 can be arranged downstream on pipe 3a as compared to the regulating valve 6. The flow transmitter 11 measures the flow through the outlet pipe 3a. The flow transmitter may be used to contribute to the detection of a situation where the separator bowl is clogged with the suspension. The flow transmitter may be used to automatically control that the flow through the outlet pipe 3a is changed upon a change in the control valve 6.

Suitable separator type for the use in the present invention is disclosed by GB1111557. Another example of a centrifugal separator suitable for the method according to the invention is depicted in Fig. 2.

The centrifugal separator 2 comprises a rotor 20 (bowl) arranged for rotation about an axis of rotation X by means of a spindle 22. The spindle 22 is supported in the frame 23 of the centrifugal separator in a bottom bearing 24 and a top bearing 25. The bowl 20 forms within itself a separation chamber 26 in which centrifugal separation of the suspended plant-based protein takes place during operation. The centrifugal separator may be of a hermetically sealed type with a closed separation space 26, i.e., the separation space 26 is intended to be filled with liquid during operation. This means that no air or free liquid surfaces is meant to be present in the bowl. The separator may comprise hermetic mechanical seals at the inlet and/or the outlets. The separation space 26 is provided with a stack of -conical separation discs 27 to achieve effective separation of the fluid. The stack of truncated conical separation discs 27 are examples of surface-enlarging inserts. These discs 27 are fitted centrally and coaxially with the rotor and comprise holes which form channels for axial flow of liquid when the separation discs 27 are fitted in the centrifugal separator.

An inlet 8 for introducing the suspension comprising plant-based proteins for centrifugal separation extends into the bowl, providing the material to be separated to the separation space 26. The inlet 8 extends through the spindle 22, which takes the form of a hollow, tubular member. Introducing the liquid material from the bottom provides a gentle acceleration of the liquid. The inlet 8 is further connected to an inlet pipe 7, into which pipe the suspension comprising plant-based proteins to be separated is pumped by means of pump 31.

The rotor has extending from it a liquid light phase outlet 4 for a lower density component separated from the suspension. A heavy phase outlet 3 for the concentrated protein suspension is arranged radially outwards of the light phase outlet. The outlets 3 and 4 extend through the casing 23. The space 31 is hermetically sealed by a mechanical seal 32 on the top at the outlets 3 and 4 and a seal 32' at the the inlet 8. The spindle 22 rotates while the inlet 8, or an inlet chamber, does not. Therefore, the mechanical seal comprises a rotating wear ring and a non-rotating seal ring and is placed axially at the inlet. To reduce a friction between the rings, they are arranged in contact with a liquid when the bowl rotates. The seal is therefore supplied with sealing liquid. In this way a hermetic seal is provided at the inlet 8. At the outlets, a corresponding mechanical seal device can be used.

The rotor is provided at its outer periphery with a set of radial solid phase outlets 28 in the form of intermittently openable outlets for discharge of e.g., solids and/or a higher density component in the suspension comprising plant-based proteins. This material is thus discharged from a radially outer portion of the separation chamber 26 to the space 31 round the rotor.

The centrifugal separator 2 is further provided with a drive motor 29. This motor 29 may for example comprise a stationary element and a rotatable element, which rotatable element surrounds and is so connected to the spindle 22 that during operation it transmits driving torque to the spindle 22 and hence to the bowl 20. The drive motor may be an electric motor. Furthermore, the drive motor 29 may be connected to the spindle 22 by transmission means. The transmission means may be in the form of a worm gear which comprises a pinion and an element connected to the spindle to receive driving torque. The transmission means may alternatively take the form of a propeller shaft, drive belts or the like, and the drive motor may alternatively be connected directly to the spindle.

The centrifugal separator may further comprise a vessel 30 in the form of a cyclone connected to the space 31 and adapted to gather solids and liquid from the solid outlets 28. The gathering vessel 30 is further connected to a discharge device in the form of a sludge pump for discharge of solids and liquid present in the gathering vessel. The sludge pump is provided with a check valve function which prevents flow back into the vessel via the sludge pump.

During operation of the separator in Fig. 2, the bowl or rotor 20 is caused to rotate by torque transmitted from the drive motor 29 to the spindle 22, which rotates. Via the inlet 8, the suspension comprising plant-based protein particles is brought into the separation space 26. In the hermetic type of inlet, the acceleration of the liquid suspension is initiated at a small radius and is gradually increased while the liquid leaves the inlet and enters the separation space 26. Different phases in the suspension, i.e., a clarified liquid corresponding to the light phase and heavy phase containing the suspended particles, are separated between the separation discs 27 fitted in the separation space 26. Heavier components in the suspension, i.e., the suspended proteins, move radially outwards between the separation discs, whereas the clarified liquid of the suspension, i.e., the light phase, moves radially inwards between the separation discs and is forced through outlet 4 that is arranged at the radial innermost level in the separator. The concentrated suspension may have higher density and is instead forced out through the outlet 3 that is at a radial level that is larger than the radial level of outlet 4. Thus, during separation, an interphase between the concentrated suspension and the clarified liquid of the suspension is formed in the separation space 26. The radial level, i.e., the distance from rotation al axis X, of this interface level can be in the hermetic separator determined by the counter pressure of outlets 3 and 4 of the separator. Some of the solids also accumulate within the solids phase outlets 28. The solids are emptied intermittently from the separation space by the solid outlets 28 being opened, whereupon solids and a certain amount of fluid is discharged from the separation space by means of centrifugal force. Solids which are discharged from the separation space via the solid outlets is conveyed from the surrounding space 31 to the gathering vessel 30 connected thereto, in which the solids accumulate and from which it is pumped out by a sludge pump.

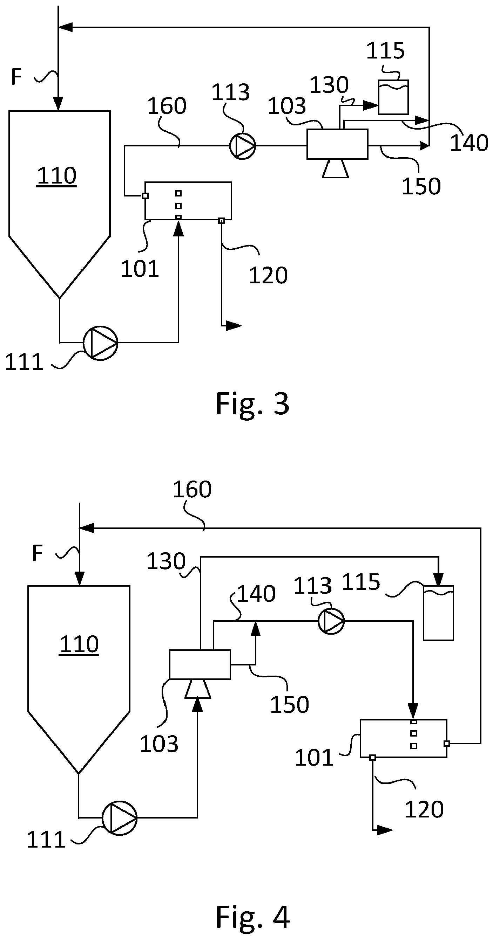

Fig. 3 and 4 illustrate example modes of a method, in which an unconcentrated protein suspension F is fed to a tank 110. The suspension F is then fed from the tank 110 by means of a pump 111 to a first separation step.

In Fig. 3, the first separation step is performed in a decanter separator 101. The suspension F is thus first pumped to a separation step in the decanter separator 101, which is arranged upstream of a high-speed separator 103. In the decanter 101 the protein suspension is separated by centrifugal force so that part of the suspended proteins 120 is harvested at a solids outlet of the decanter and a liquid phase 160 still containing suspended particles is pumped from the decanter 101 by means of a pump 113 to the high-speed separator 103. A clarified light phase 130 is collected in a tank 115. The heavy phase 140 together with any solid matter 150 discharged from the bowl periphery of the high-speed separator 103, is fed back to the decanter 101, either directly or via the feed tank 110 as illustrated in Fig. 3

In Fig. 4 the first separation step is performed in a high-speed separator and the protein suspension F is thus first fed to the high-speed separator 103. The clear light phase 130 is collected into a tank 115. The heavy phase 140 comprising the suspended proteins and discharged proteins in the solids 150 are pumped by means of a pump 113 to a decanter 101. After centrifugation in the decanter 101, the suspended proteins 120 are collected and a liquid phase 160 still containing suspended particles is returned to the tank.

According to the present disclosure, the above-described method has been further developed to provide a simple and hygienic process in which purified and dewatered starch and fibres can be provided in addition to protein in an integrated process.

In the known solutions a single decanter may be used to remove starch and fibre together from the protein extraction slurry. The decanter solids phase then needs to be processed further to separate starch and fibre and purify the starch. This is laborious and uses for example the following steps: diluting of the decanter solids phase with process water; separating fibre and starch with a rotating screen and washing of the fibre retained on the screen surface with process water; pre-dewatering of the washed fibre on a second stage rotating screen; final dewatering of the fibre with a decanter; concentrating the starch that has been diluted by the fibre wash water using a hydrocyclone system; purification of the concentrated starch with a second hydrocyclone system. These process steps can be replaced by the present described single hydrocyclone system that separates starch and fibre and purifies the starch in a single step followed by the two decanter steps to separate and wash the fibre. This is a much simpler and hygienic process. Additionally, water can be re-circulated from downstream process steps to upstream process steps, whereby water-savings can be achieved while important product losses can be decreased.

As mentioned above, starch washing systems may generally comprise hydrocyclones or multicyclones. The systems may comprise several multicyclones installed in series. Each multicyclone may be connected to a centrifugal type of feed pump. Multicyclone relates to a housing where several cyclonettes (hydrocyclones) can be manifolded in parallel and it has a feed inlet, an overflow outlet, and an underflow outlet. Depending on the plant capacity, different types, or sizes of multicyclones may be chosen. Cyclonettes may be of different types. For example, the cyclonettes may be of a type of clarifier or concentrator. Basically, the difference between the two different types is that a clarifier is longer than the concentrator and has a narrower cone angle that the concentrator.

During the operation of the hydrocyclone system comprising several hydrocyclones, the feed is introduced at the inlet of a first hydrocyclone configured to perform a washing stage. The wash water is introduced at the inlet of the last washing stage. The feed may be an aqueous slurry comprising starch. The feed may also comprise both soluble impurities, such as salts, sugar and protein, and insoluble impurities, such as cell fibres and insoluble proteins. The feed can have a dry substance content of about 10% by wt. or more.

The feed to stage n is the underflow of stage n-1 diluted by the overflow of stage n+1. In this way a counter current washing of the starch is created in the hydrocyclone system. The purified starch leaves the system at the underflow of the last stage and the spent wash water leaves the system at the overflow of the first stage.

As an example of a 12-stage process, the feed to a given stage may contain 21 wt.% starch and this can be concentrated to 37 wt.% in the underflow of stages 1 to 11 where a clarifier type of cyclonettes is used. In the underflow of the last stage 12 where concentrator type of cyclonettes is used, the starch is concentrated to 39-40 wt.%. The system is operated so that the starch split in the cyclonettes is approximately 75% to the underflow and 25% to the overflow. This means that there is a large recycle of starch inside the system and out of the system. A large starch recycle is needed to achieve a good washing. The recycle carries the washed-out impurities out of the system. This also means that starch is lost with the overflow. In for example yellow pea process where starch should not be lost, two or more clarifiers on the overflow of the first washing stage can be used to recover and recycle the starch to the feed of the first washing stage. Washing out soluble solids from the feed is easy. When only soluble impurities are present a good washing can be achieved with a few washing stages, such as 6 or less washing stages. Washing out insoluble solids from the feed is more difficult. When insoluble impurities are present a good washing requires 12 or more stages.

Further example of a possible use of a hydrocyclone system is for the separation of insoluble impurities like cell fibre. For this purpose, 10 mm cyclonettes can be used to separate the insoluble starch and insoluble cell fibre by g-force because of the large difference in density.

Hydrocyclones can be used for the separation of soluble impurities like protein. The soluble impurities can be separated by dilution of the feed to a stage followed by concentration of the starch in the underflow of the stage by displacement of the water that contains the soluble impurities. The more the system can concentrate the starch the better it washes out the soluble impurities.

It is advantageous if a starch washing system is kept pressurised. Therefore, the outlets may be equipped with control valves. In addition, a control valve may be included for the wash water.

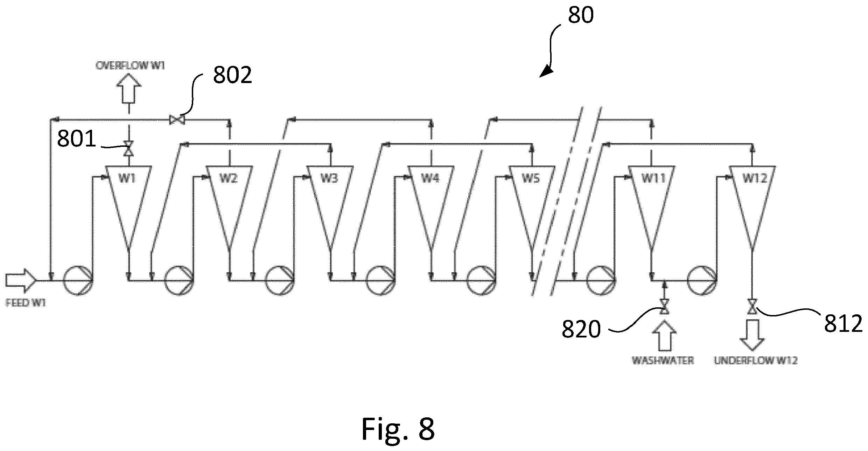

To illustrate the function of the hydrocyclone system in which control valves are used, reference is made to Fig. 8. The system 80 comprises 12 hydrocyclones W1-W12. The hydrocyclone system 80 may be operated in the following way. In connection with the last hydrocyclone W12, an underflow control valve 812 controls the starch concentration and the starch mass flow out of the system. If the control valve 812 is throttled the starch concentration increases and the starch mass flow decreases. The W2 overflow control valve 802 controls the internal starch mass recycle. If the valve 802 is opened more the starch concentration in the W2-W12 overflows increases and the starch mass flow from the overflows increases too. The W1 overflow control valve 801 controls the external starch mass recycle out of the system. If the valve 801 is opened more, the starch concentration increases, and the starch mass flow increases too. The wash water flow is controlled by a valve 820. The flow depends on the number of washing stages and the concentration of impurities to be washed out. As an example, the wash flow may be about 3.5 m³/ton starch produced for a 6-stage system and 2.15 m³/ton for a 14 stage system. The required wash water flow and starch concentrations in the W12 underflow, the W1 overflow and the W2 overflow can be calculated, and the calculated flows and concentrations may be used as reference values during operation. In a manually operated system, the three concentrations can be measured by an operator, who can adjust the control valves accordingly to reach these calculated values. A starch washing system can also be fully automated with mass flow meters and automatically actuated control valves.

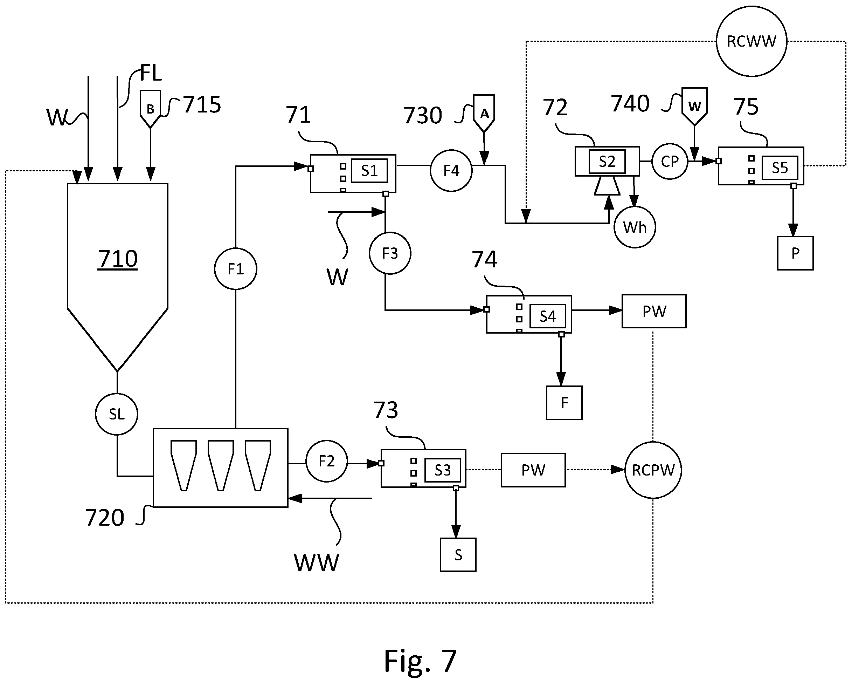

Reference is now made to Fig. 7, which illustrates a system for separating starch and fibre and concentrating the plant-based protein suspension as described above. In the system, plant protein in for example a starch crop can be extracted by dehulling and subsequently milling into a flour FL. The flour FL is mixed with water W in a tank 710 to provide a slurry. The ratio flour to water may be for example from 1:2 to 1:5, for example of 1:3. A slurry with approximately 15-40% dry solids by weight, for example 25% wt.% dry solids can be processed in the present process, although the solids content is not limited thereto.

The protein solubility can be increased in the tank. The increased protein solubility in the slurry SL may be obtained by a chemical and/or physical treatment comprising at least one of mixing, regulating temperature and/or adding a chemical to increase the solubility of the protein. For example, the pH of the slurry may be adjusted by adding a base to higher pH than naturally obtained during the mixing. For example, the pH may be adjusted to above 7, for example to about 8 to 9. The pH adjustment can be made by adding a base B via a dosing arrangement 715 to the slurry. The base may comprise an alkali hydroxide, such as sodium hydroxide (lye).

The flour-water slurry (SL) is fed from the tank 710 to a hydrocyclone system 720, where starch fraction and fibre fraction are separated from the feed. The starch is purified in the hydrocyclone system 720. The hydrocyclone system may be as described above in connection with Fig. 8 and may comprise from 8 to 12 washing stages and 2 to 4 clarifying stages. Wash water WW is added upstream the last washing stage and can be added in the ratio of 0.1 to 1.0 m³ per m³ feed, such as 0.5 m³ per m³ feed to the hydrocyclones.

The underflow of the hydrocyclone system 720 is purified starch, which may be present up to about 45 wt.%, such as in a 38-40 wt.% water suspension. The starch suspension can be dewatered and dried as native starch, or it can be used for other applications such as but not limited to fermentation or sweetener production. With reference to Fig. 7, the second flow F2 from the hydrocyclone system 720 corresponds to the purified starch suspension and it can be dewatered in a third centrifugal separator S3 to provide the dewatered starch S and process water PW, which may or may not be recirculated as recycled process water RCPW together or separately with the process water from the fourth centrifugal separator S4. The third centrifugal separator S3 may be a decanter centrifuge configured to separate 2 phases, i.e. liquid and solids, or 3 phases, i.e. light and heavy liquids and solids.

The overflow of the hydrocyclone system 720 corresponds to the protein solution with cell fibres in suspension, herein referred to a first flow F1. The overflow may also contain other flour components, such as water-soluble oligosaccharides and salts and the remaining water insoluble protein in suspension. This hydrocyclone system overflow, i.e. the first flow F1, is fed to a first centrifugal separator S1 corresponding to a fibre decanter, to separate the cell fibre in the suspension. The fibre is discharged as the decanter solids phase and the liquid phase is an aqueous protein-containing fraction referred to as a fourth flow F4. The first centrifugal separator S1 may be a decanter centrifuge configured to separate 2 phases, i.e. liquid and solids, or 3 phases, i.e. light and heavy liquids and solids. The solids phase containing cell fibres may have a dry content of approx. 15-30 wt.%, such as 20 wt.% dry solids. The dry solids may also contain protein for example from 10-20%, such as approximately 15 wt.% protein on dry solid basis. To recover some of this protein the decanter solids phase can be washed with water. The amount of water can be in the ratio of 2 m³ per ton wet fibre. The solids with the added wash water are referred to as a third flow F3 and may be fed to a fourth centrifugal separator S4, which is herein referred to as a fibre wash decanter. The fibre wash decanter S4 provides the washed fibres F as the decanter solids phase. The wash water containing the washed-out protein overflows from the decanter S4 and is herein referred to as process water PW. The process water PW is recirculated via a recirculation line RCPW back to the upstream process steps, for example back to the mixing tank 710. Thus, the spent wash water is recycled and used for extracting protein from flour FL as described above. The washed fibres F can be dried as a separate product. The fourth centrifugal separator S4 may be a decanter centrifuge configured to separate 2 phases, i.e. liquid and solids, or 3 phases, i.e. light and heavy liquids and solids.

The liquid phase from the first centrifugal separator S1 is referred to as a fourth flow F4 and corresponds to an aqueous protein-containing fraction. This fourth flow F4 is basically treated in a similar manner as described above in connection with Fig. 4. Upstream of a second centrifugal separator S2, further depicted with 72, which is a high-speed centrifugal separator as described above, at least part of the dissolved protein in the fourth flow F4 can be precipitated. In the present method, for example an acid may be added to the fourth flow F4 to precipitate the dissolved proteins. In this way a protein suspension as described above is provided. By using the second centrifugal separator S2, the fourth flow F4 containing the protein-containing fraction can be separated into a liquid light phase comprising whey (Wh) and a heavy phase comprising concentrated protein-containing fraction (CP).

As already discussed above, the use of centrifugal high-speed separators in separation of suspended proteins has previously been associated with some difficulties, since it is difficult to separate the suspended protein precipitates from the liquid phase due to small difference in densities between the phases. However, it has been noted that the specific type of the high-speed centrifugal separator with flow influencing means at the outlets of the separator can be used for the separation. Especially advantageous type of a high-speed separator is additionally hermetically sealed both at the inlet and the outlets. By using the above-described high-speed centrifugal separator, it has been surprisingly noted that minimal protein losses can be obtained. This is possible since the separation can be controlled by means of the flow influencing means such that the content of the suspended proteins at the light phase outlet is minimized.

The step of influencing the flow through the heavy phase outlet in the second centrifugal separator (S2) comprises adjusting counter pressure of the heavy phase at the heavy phase outlet with respect to the liquid light phase outlet, or vice versa. The flow influencing means is suitably a flow regulating means comprising a valve. Furthermore, the inlet and the heavy phase and light phase outlets of the second high-speed centrifugal separator S2 can be hermetically sealed by means of mechanical hermetic seals, whereby hygienic handling of the product streams can be obtained.

The concentrated protein suspension CP obtained from the second separator S2 is washed with water and dewatered in a fifth centrifugal separator S5, depicted as 75 and referred to as a protein decanter. The protein P is discharged as the decanter solids phase and can be further processed by heat treatment and drying. Wash water overflowing the decanter is the liquid phase and can be recycled as a flow RCWW back to the second centrifugal separator S2 or 72. The remaining protein in the whey removed by the second centrifugal separator S2 or 72 can be recovered by e.g., heat coagulation followed by decantation.

### Examples

### Pre-treatment to obtain suspension

A slurry is prepared by mixing dehulled flour of yellow pea with water. The pH of the resulting slurry is modified by adding lye to a pH value higher than 7, which accelerates the protein solubilization. After the pH adjustment, 30-60 minutes of residence time is provided to provide time for extracting the water-soluble proteins.

Once the extraction is completed, the resulting slurry will be pumped to a centrifugal separation unit such as a decanter, hydrocyclones etc, where the suspended particles comprising starch and fibres are removed from the liquid that includes the solubilized proteins.

The clarified liquid from the previous step is collected into an agitated tank, where the pH is lowered to the isoelectric point of the proteins with the dosing of an acid. The decrease in pH lowers the solubility of the proteins and causes them to precipitate out of the solution. Thereby a suspension comprising plant-based proteins from yellow peas is provided.

### Suspension characteristics

### Particle size distribution

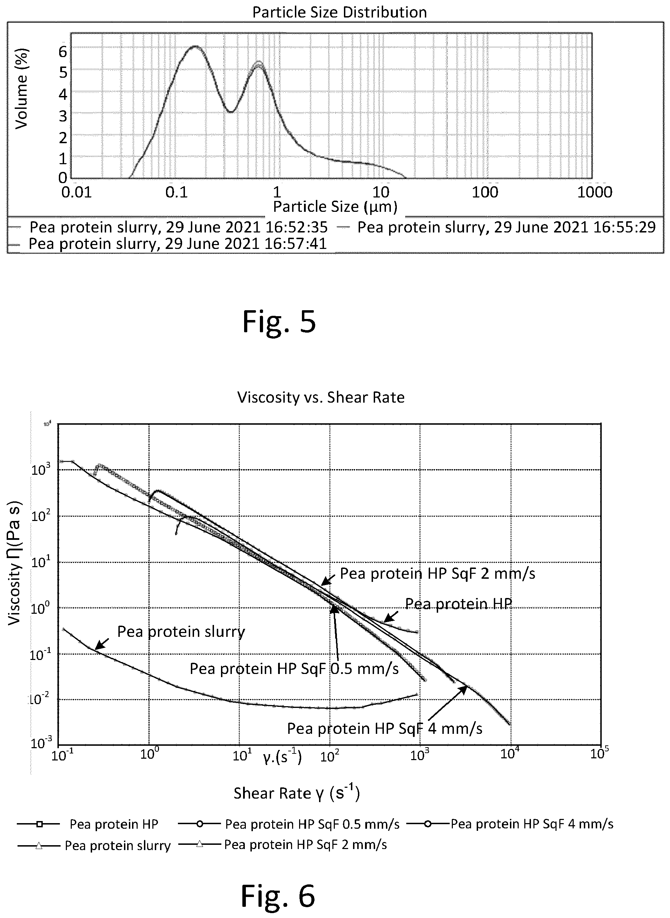

Particle size distribution of the suspended yellow pea protein was measured by a Malvern Mastersizer 2000, which is a laser diffraction instrument. Three measurements were made and Fig. 5 shows the results. It can be seen that the suspension comprises fine particles, where *d(0,1): 0,089 µm, d(0,5): 0,286 µm and d(0, 9): 1,779 µm.*

### Shear Viscosity

The shear viscosity was measured by a rheometer for both the slurry (suspension) and for solids collected from centrifugation for 10 min at 3000 rpm. The measurements were performed by Malvern Kinexus Lab+ Rheometer and the shear viscosity measurement sequency are from the rheometer rSpace software. The purpose of the measurement was to see if the slurry and solids have shear thinning properties.

Slurry was measured using bob & cup geometries with the shear rate ramp sequence. The solids were measured using the serrated plate geometries with the shear rate ramp sequence. For further flow characterization of the solids also squeeze flow sequence was applied with parallel plates and gapping speeds 0,5; 2 and 4 mm/s (Pea protein HP; Pea protein HP SqF 0.5; 2; 4 mm/s).

Shear viscosity of both slurry (Pea protein slurry) and solids are presented in Fig. 6. It can be seen from the Fig. 6 that both slurry and solids show shear thinning behaviour.

### Comparative tests

Comparative tests were performed with the plant-based protein suspension prepared as described above.

In the tests, a volumetric solids content of 0.5% was a target value for the light phase, i.e. the clarified liquid phase of the suspension from both the high-speed separator and the decanter separator. A feed volume comprising 120 l/h solids could be processed in a decanter, while a feed flow comprising 700 l/h solids could be treated in Alfa Laval PurePulp^{®} high-speed separator. This means that the volumetric capacity of the high-speed separator was 5.8 times larger than that of a decanter, while the same low content of suspended particles in the light phase was obtained (0,5% vol) and no clogging of the machines occurred.

### Conclusions from the plant-based protein separation tests

Pilot scale test on yellow pea has shown, that Alfa Laval PurePulp^{®} high-speed separator can harvest protein precipitate and deliver a light phase with a very low content of suspended particles.

The high-speed separator is thus a viable technology for separating suspended plant-based protein as the suspended particles due to their physicochemical nature can be pushed to the heavy phase outlet. This enables to run the high-speed separator (HSS) with a continuous heavy liquid flow, thus allowing to feed the machine with feed concentrations that are normally considered too high for HSS. The machine has still solids discharge capability, which is used to maintain the stability of the machine since there will be accumulation of impurities in the periphery. The discharge is not the intended separation method as opposed to other types of HSS machines such as clarifiers.

The Alfa Laval PurePulp^{®} high-speed separator demonstrates higher volumetric capacity with similar or improved light phase quality than the decanter centrifuge. This allows to use the Alfa Laval PurePulp^{®} high-speed separator either as a pre-concentrator prior to the decanter or as a light phase cleaner after the decanter. With this combination it is possible to use less decanters and have overall higher recovery of the protein within the overall process.

## Claims

1. Process for extracting starch, fibres and protein from a plant-based raw material, the process comprising:
- providing a flour (FL) from the plant-based raw material,
- mixing the flour (FL) with water (W) and/or process water recirculated from a downstream process step (RCPW) to provide a slurry (SL),
- increasing the protein solubility in the slurry (SL) by a chemical and/or physical treatment comprising at least one of mixing, regulating temperature and/or adding a chemical to increase the solubility of the protein,
- supplying the slurry and wash water to a hydrocyclone system (720), which provides a first flow (F1) comprising the fibres (F) and protein (P) extracted from the plant-based raw material and a second flow (F2) comprising starch (S) extracted from the plant-based raw material,
- supplying the first flow (F1) to a first centrifugal separator (S1) arranged to separate the first flow to a fibre fraction as a third flow (F3) and an aqueous protein-containing fraction as a fourth flow (F4),
- precipitating dissolved protein at least partly in the fourth flow (F4),
- separating the fourth flow (F4) containing the protein-containing fraction into a liquid light phase comprising whey (Wh) and a heavy phase comprising concentrated protein-containing fraction (CP), by using a second centrifugal separator (2; S2, 72), which is a high-speed centrifugal separator comprising:
a frame (23), a drive member (29) and a centrifuge bowl (20),
wherein the drive member (29) is configured to rotate the centrifuge bowl in relation to the frame (23) around an axis of rotation (X), and
wherein the centrifuge bowl (20) encloses a separation space (26) comprising a stack of separation discs (27), and
wherein the centrifuge bowl (20) further comprises an inlet (8) for receiving the fourth flow (F4) containing the protein-containing fraction, a liquid light phase outlet (4) for a separated liquid light phase and a heavy phase outlet (3) for a separated heavy phase, and
wherein the heavy phase outlet and/or light phase outlet are/is arranged in fluid connection with a flow influencing means (6; 12); and
wherein the separating in the second centrifugal separator (S2) comprises regulating the flows at the heavy phase and/or light phase outlets by means of the flow influencing means such that the content of the protein-containing fraction at the light phase outlet is minimized.

2. Process according to claim 1, further comprising supplying the second flow (F2) containing the starch extracted from the plants to a third centrifugal separator (S3) for further purifying and/or dewatering the starch (S).

3. Process according to claim 1 or 2, further comprising supplying the third flow (F3) comprising fibres and water to a fourth centrifugal separator (S4) to provide washed fibres and extracted process water (PW), which is at least partly re-circulated in the upstream process.

4. Process according to any one of the preceding claims, further comprising supplying the concentrated protein-containing fraction (CP) from the second centrifugal separator (S2) to a fifth centrifugal separator (S5), wherein protein (P) in the protein-containing fraction is discharged as the solids phase.

5. Process according to claim 4, further comprising adding water (W) to the concentrated protein-containing fraction (CP) from the second centrifugal separator (S2) upstream of the fifth centrifugal separator (S5), and re-circulating separated water from the fifth centrifugal separator (S5) to the fourth flow (F4) downstream of the first centrifugal separator (S1) and upstream of the second centrifugal separator (S2).

6. Process according to any one of the preceding claims, wherein the process step of increasing the protein solubility includes adjusting the pH in the slurry by adding a base and by at least partly precipitating dissolved protein in the fourth flow (F4) by adding an acid.

7. Process according to any one of the preceding claims, wherein the whey (Wh) separated in the second centrifugal separator (S2) contains non-precipitated proteins, and the process further comprises recovering the protein in the whey (Wh) by heat coagulation and/or decantation.

8. Process according to any one of the preceding claims, wherein the step of influencing the flow through the heavy phase outlet in the second centrifugal separator (S2) comprises adjusting counter pressure of the heavy phase at the heavy phase outlet with respect to the liquid light phase outlet, or vice versa, and wherein the flow influencing means is a flow regulating means comprising a valve.

9. Process according to any one of the preceding claims wherein the method further comprises:
- measuring at least one parameter of the removed heavy phase and/or liquid light phase, wherein said parameter is related to the concentration of the heavy phase in the light phase, or vice versa; and
- adjusting the counter pressure of the heavy phase outlet with respect to the liquid light phase outlet, or vice versa, based on the parameter related to the concentration.

10. Process according to any one of the preceding claims, wherein at least one of the first, third, fourth and fifth separators (S1; S3; S4; S5) is a decanter centrifuge.

11. Process according to any one of the preceding claims, wherein inlet and the heavy phase and light phase outlets of the second high-speed centrifugal separator (S2) are hermetically sealed by means of mechanical hermetic seals.

12. Process according to any one of the preceding claims, wherein the plant-based raw material comprises starch crops comprising legumes, cereals and/or oilseeds.

13. Process according to any one of the preceding claims, wherein the plant-based raw material comprises cereals and/or legumes, such as yellow peas, fava beans, mung beans, lentils, chickpeas, or combinations thereof.
